(19) Europäisches Patentamt
European Patent Office
Office européen des brevets

(11) **EP 1 333 247 A1**

(12) **EUROPEAN PATENT APPLICATION**

(43) Date of publication:
06.08.2003 Bulletin 2003/32

(51) Int Cl.⁷: **G01C 21/20**, H04Q 7/38,
G01C 22/00

(21) Application number: 02002279.4

(22) Date of filing: 30.01.2002

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Sony International (Europe) GmbH**
**10785 Berlin (DE)**

(72) Inventors:
• **Kobayashi, Tetsuo**
**85609 Aschheim-Dornach (DE)**

• **Watanabe, Kyoko**
**85609 Aschheim-Dornach (DE)**

(74) Representative: **Körber, Martin, Dipl.-Phys. et al**
**Mitscherlich & Partner**
**Patentanwälte**
**Sonnenstrasse 33**
**80331 München (DE)**

(54) **Mobile terminal pedometer using time advance values**

(57) The present invention provides a mobile terminal (2) for use in a cellular mobile telecommunication system (1, 10) with a calculation means (64) for calculating a length for a track travelled by the mobile terminal (2) when being moved within the cellular mobile telecommunication system (1, 10), whereby the calculation is based on time values (5) received from at least four different base station (3) of the mobile telecommunication system (1, 10), with each time value (5) being indicative of the propagation time of signals transmitted from the mobile terminal to a respective base station at different positions (P1, P2, P3, P4, P5, P6) of the mobile terminal (2) along said track.

Fig. 3

EP 1 333 247 A1

**Description**

The present invention relates to a mobile terminal for a cellularly organised mobile telecommunication system. The present invention relates in particular to a mobile terminal being able to provide information about its movement within a mobile telecommunication system.

Mobile terminals may recite at an arbitrary position within a cell of the telecommunication system. The distance of the mobile terminal to the base station may therefore vary resulting in different propagation times of the signals between the mobile terminal and the base transceiving station. A base station thus receives the individual data bursts transmitted from a mobile terminal of a user moving within the cellular telecommunication system with a varying time offset.

The TDMA-method used in mobile cellular telecommunication systems is strongly dependent on an accurate synchronisation of the individual data bursts being received at the base station. A time delay is not tolerable for a TDMA-system. In particular, data bursts transmitted from two different mobile terminals in consecutive time slots are not allowed to overlap for more than the given guard period when received by a base transceiving station, regardless of their delay due to considerably different propagation times.

To avoid any overlap of data bursts received at a base station, the mobile terminal transmits its data at an earlier time if it is placed far away from the base station than it would when being located closer to it. The farther the mobile terminal resides to the base station the longer is the offset towards earlier transmitting times. This mechanism is organised by a process called adaptive frame alignment, which adapts the transmission time of each mobile terminal to the TDMA-frame at the base station. The adaptive frame alignment uses to this behalf a parameter called timing advance (TA) which is transmitted within a slow associated control channel (SACCH) block. A mobile terminal receives a TA value from a base station during a downlink, based on which it is able to adjust its transmission time to the TDMA-frame of the base station. The timing advance value corresponds to the round trip delay time being the double of the propagation time of signals transmitted between the mobile terminal and the base station. The distance between the base station B and the position P of the mobile terminal can therefore be calculated from the TA value received by the mobile terminal from the respective base station according to the equation:

$$1_{BP} = \frac{c \cdot t_{bit}}{2} \cdot TA_{BP}; \tag{1}$$

wherein c is the velocity of propagation for radio waves, $t_{bit}$ is the time period of a bit in a data burst (for GSM systems $t_{bit} = 3.69 \cdot 10^{-6}$ s resulting in $1_{BP} \approx TA_{BP} \cdot 554m$;).

A turned on mobile terminal constantly queries the channel parameters of up to 16 neighbouring base stations for identifying neighbouring cells in the mobile communication system as potential destinations for a possible hand-over. One of the channel parameters is the timing advance value indicative of the distance of the mobile terminal to the respective base station.

When a mobile terminal moves within the cellular telecommunication system, the timing advance values will be updated on a constant basis, but this in itself does not allow a user of the mobile terminal to track its way within the cellular telecommunication system.

It is therefore an object of the present invention to propose a mobile terminal, which utilises time values received from different base stations, and which are indicative of the distance of the mobile terminal to the respective base station, for acquiring information about a track travelled by the mobile terminal within a cellular telecommunication system.

This object is achieved by the invention as defined in the independent claims.

In particular, the above object is achieved by a method for calculating a length of a track travelled by a mobile terminal when being moved within a cellular telecommunication system, whereby the calculation is based on time values received from at least four different base stations of the mobile telecommunication system, with each time value being indicative of the propagation time of signals transmitted from the mobile terminal to a respective base station at different positions of the mobile terminal along said track.

The above object is further achieved by a mobile terminal for use in a cellular mobile telecommunication system with a calculation means adapted to perform a method according to the present invention.

Further, the above object is achieved by a software product for calculating a length of a track travelled by a mobile terminal when being moved within a cellular telecommunication system adapted to perform a method according to the present invention when being stored on a storage means and executed by a processing means of the mobile terminal.

The present invention advantageously determines a track travelled by a mobile terminal within a cellular mobile telecommunication system by utilising a time value provided by the base stations of the system for a synchronisation of the transmission times of the mobile terminals operating in the telecommunication system. No further position information is needed, neither for one of the base stations involved nor for the mobile terminal itself.

Further developments are set forth in the dependent claims.

The time value being indicative of the propagation time of signals transmitted from the mobile terminal to a respective base station is advantageously formed by the timing advance value as this value is constantly updated by the base stations thus forming an actual indicator for the distance of the mobile terminal to the respective base stations.

Further advantageously, not only the length of a track travelled by the mobile terminal within the cellular mobile telecommunication system but also the co-ordinates of each position of the mobile terminal along this track are calculated. This allows to determine a users position in addition to the distance already covered.

To ease the calculation, the length of the track travelled by the mobile terminal is preferably calculated from the calculated positions of the mobile terminal along the track.

A further simplification of the computing procedure is advantageously achieved by basing the calculation on time values representative for distance and/or co-ordinate values with a final result being transformed in a spatial value by a multiplication or a division with a constant factor. As all source data used represent time values, the calculation can thus be sped up considerably.

According to an advantageous development of the present invention, preferably time values received from six different base stations are used to calculate the length of the track travelled by the mobile terminal within the cellular mobile telecommunication system, thus allowing a calculation with a minimum set of equations to be solved.

A mobile terminal according to the present invention may be used as a pedometer with the advantage free of a need for determining the stride length of a current user. It may further be used to monitor the current and final distances travelled e.g. on business or private trips or the like. For a business trip the data can e.g. be used in a travel expense report or other travel reports. On a private excursion, like for instance a cross country tour, a mobile terminal according to the present invention will help the user to monitor the actual distance which he already covered. The present invention furthermore allows a user to determine his present position with his mobile terminal.

In the following, the present invention will be explained in detail with respect to special embodiments and in relation to the enclosed drawings, in which

Fig. 1    shows a mobile terminal and a base station in radio contact,

Fig. 2    shows a mobile terminal with its relative distances to 6 neighbouring base stations indicated,

Fig. 3    shows a mobile terminal in two different positions and the respective distances to the six neighbouring base stations for both positions,

Fig. 4    shows a mobile terminal at six positions along a track the length of which is determined by the present invention,

Fig. 5    is a flow chart showing the principle of operation of the calculation means of a mobile terminal according to the present invention, and

Fig. 6    is a block diagram of a mobile terminal according to the present invention.

In the drawings, alike elements are generally assigned like reference numerals.

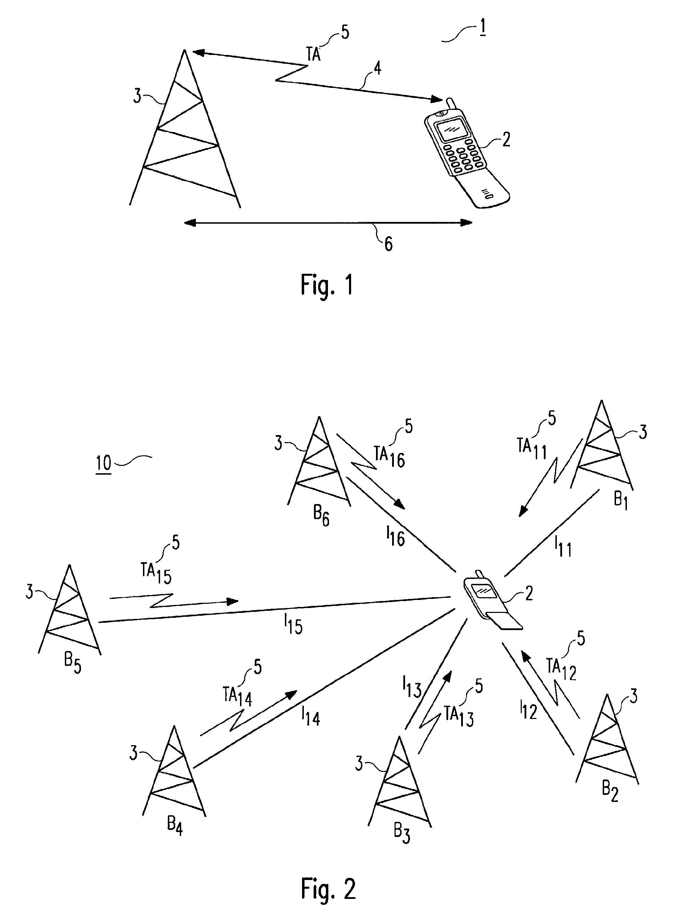

Fig. 1 illustrates the principle situation 1 utilised for the present invention when a mobile terminal 2 stays in radio contact 4 with a base station 3 thereby receiving a timing advance (TA) value 5, which corresponds to the distance 6 between the mobile terminal 2 and the base station 3. The relation between the timing advance value TA and the distance 6 is given in the above equation (1). In GSM telecommunication systems, TA is subdivided into 64 levels with values ranging from 0 to 63. The value 0 hereby indicates, that no time delay has to be considered, which means that the mobile terminal resides very close to the base station. For timing advance values higher than 0 the timing of the uplink frames is shifted to values such, that the time delay between a transmission of a TDMA-frame of the uplink with respect to that of the downlink is shortened accordingly. The available range of values allows a maximum propagation time compensation of 31.5 bit periods or approximately 116.3 μsec in GSM systems. This corresponds to a maximum allowed distance between a mobile terminal and a base station of about 35 km with a distance resolution of around 0.5 km. The value range for the timing advance parameter may be different in different telecommunication systems, so that the maximum distance as well as the distance resolution may be different for telecommunication systems other than a GSM system.

A distance 6 ($1_{BP}$) between the mobile terminal 2 and the base station 3 can, from the geographical point of view be expressed by the equation

$$1_{BP} = \sqrt{(B_x - P_x)^2 + (B_y - P_y)^2 + (B_z - P_z)^2}; \tag{2}$$

wherein the B values denote the co-ordinates of the base station 3 and the P values denote the co-ordinates of the position of the mobile terminal 2 within a three-dimensional geographic co-ordinate system.

Equation (2) contains six unknown quantities, three for the co-ordinates B of the base station 3 and three for the co-ordinates of the position P of the mobile terminal 2.

Usually, a mobile terminal station stays in contact with more than just one base station. In Fig. 2, the mobile terminal 2 is shown to receive timing advance values 5 ($TA_{11}$, $TA_{12}$, $TA_{13}$, $TA_{14}$, $TA_{15}$, $TA_{16}$) from six different base stations 3 $B_1$ to $B_6$. The calculation means 64 of the mobile terminal 2 calculates for each of the received timing advance values $TA_{11}$ to $TA_{16}$ a respective distance by utilising equation (1). The resulting length values $1_{11}$ to $1_{16}$ represent the distances of the mobile terminal to one of the respective base station $B_1$ to $B_6$.

The length of each distance $1_{11}$ to $1_{16}$ can also be expressed based on the co-ordinates of the six base stations $B_1$ to $B_6$ and the co-ordinates of the position P of the mobile terminal 2, resulting in the following set of equations:

$$l_{11}^2 = (B_{1x} - P_x)^2 + (B_{1y} - P_y)^2 + (B_{1z} - P_z)^2;$$
$$l_{12}^2 = (B_{2x} - P_x)^2 + (B_{2y} - P_y)^2 + (B_{2z} - P_z)^2;$$

$$
\begin{aligned}
l_{13}^2 &= (B_{3x} - P_x)^2 + (B_{3y} - P_y)^2 + (B_{3z} - P_z)^2; \\
l_{14}^2 &= (B_{4x} - P_x)^2 + (B_{4y} - P_y)^2 + (B_{4z} - P_z)^2; \\
l_{15}^2 &= (B_{5x} - P_x)^2 + (B_{5y} - P_y)^2 + (B_{5z} - P_z)^2; \\
l_{16}^2 &= (B_{6x} - P_x)^2 + (B_{6y} - P_y)^2 + (B_{6z} - P_z)^2;
\end{aligned}
\tag{3}
$$

wherein the numerical index of the B's refers to the number of the respective base station and the letter index to the respective co-ordinate component.

Because neither the co-ordinates of a base station nor that of the position of the mobile terminal are known, the set of equations (3) contains 21 unknown parameters, which means that this set of six equations (3) cannot be solved.

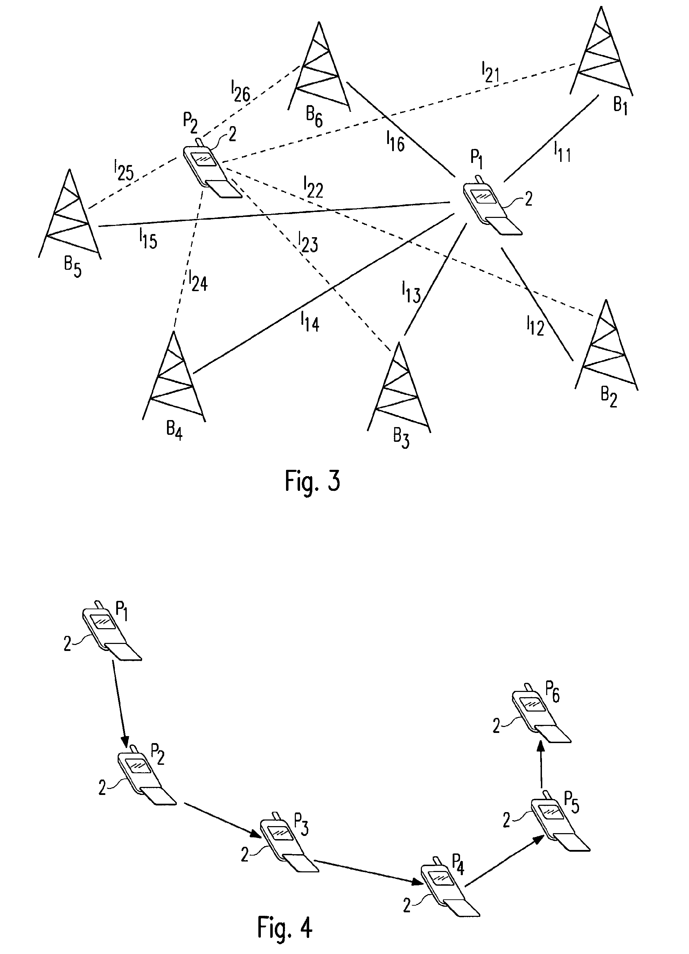

Referring to Fig. 3, the mobile terminal 2 is shown in two different positions $P_1$ and $P_2$. The distances from the mobile terminal in position $P_1$ to each one of the base stations $B_1$ to $B_6$ are shown to be $1_{11}$ to $1_{16}$, and from position $P_2$ the distances are shown to be $1_{21}$ to $1_{26}$ correspondingly. A set of equations for the second position is obtained analogously to the set of equations (3) for the first position, so that a set of 12 equations containing a total of 24 unknown parameters is obtained. Following this scheme, it becomes obvious that for every new position of the mobile terminal 2 the resulting set of equations is enlarged by as much as equations as there are base stations used, but that the number of unknown quantities in these equations increases only by the 3 new values representative for the new position of the mobile terminal.

To solve a set of equations, the number of conditional equations has at least to match the number of unknown quantities in this set of conditional equations. The number of equations obtained for every position of the mobile terminal equals the number of timing advance values received by the mobile terminal at this position for further evaluation. The number of unknown quantities corresponds to the co-ordinates of the base stations used for the evaluation and for the different positions of the mobile terminal 2 with respect to these base stations. Given a three-dimensional co-ordinate system, each co-ordinate is set up of three components or values, respectively. Assuming that the number of base stations involved in the evaluation is M, and the number of positions taken in by the mobile terminal 2 is N, the equation

$$N \cdot M \geq 3(N+M); \tag{4}$$

has to be satisfied for determining the number of base station and positions of the mobile terminal necessary to obtain a solvable set of equations. The condition (4) is symmetrically in N and M so that the two conditions

$$N \geq \frac{3M}{M-3}; \qquad (4a)$$

$$M \geq \frac{3N}{N-3}; \qquad (4b)$$

have to be met. Both, N and M are integers with a minimum value of 1, because at least one base station has to be present and the mobile terminal has to reside at least at one position within the reach of that base station. From condition (4a) and (4b) can be deduced that either a minimum of four base stations or, seen from a moving mobile terminal, a minimum of four different positions of the mobile terminal is required. The minimum requirements for achieving a determined set of equations is given below in table 1.

Table 1:

| Minimum requirements for a determined equation set | | | |
|---|---|---|---|
| **M** | **N** | **M×N** | **E = Equation** <br> **U = Unequation** |
| 4 | 12 | 48 | E |
| 5 | 11 | 55 | U |
| 5 | 10 | 15 | U |
| 5 | 9 | 45 | U |
| 5 | 8 | 40 | E |
| 6 | 7 | 42 | U |
| 6 | 6 | 36 | E |
| 7 | 6 | 42 | U |
| 8 | 5 | 40 | U |
| 9 | 5 | 45 | U |
| 10 | 5 | 50 | U |
| 11 | 5 | 55 | U |
| 12 | 4 | 48 | E |

The first column of table 1 contains the number M of base stations utilised by a mobile terminal 2, and the second column contains the number N of different positions for the mobile terminal within the range of these base stations required to obtain a determined set of equations. The third column lists the number of single equations obtained for the respective combination of base stations and positions of the mobile terminal. The letter 'e' in the forth column indicates condition (4) is met in form of an equation, while an 'u' indicates that condition (4) is met in form of an unequation resulting in an over-determined set of equations.

As can be seen from the third column, the number of equations obtained is generally lower for an exactly determined set of equations where condition (4) is met in form of an equation. The minimum number of equations in a set is obtained with 36 for the case of six base stations with the mobile terminal taking in six positions within the range of these base stations.

A mobile terminal usually reports the channel parameters of the six base stations it receives best to its actual base station which form as decision criteria for a possible hand-over. The timing advance values 5 for the six base stations with the best reception quality are therefore already present and no extra effort is necessary to obtain the respective values. When the mobile terminal 2 moves within the range of the six base stations from its first position $P_1$ via the intermediate positions $P_2$, $P_3$, $P_4$, and $P_5$ to position $P_6$, a total of 36 timing advance values is received from the six base stations. This equals the 36 unknown quantities represented by the co-ordinates of the six positions $P_1$ through $P_6$ and the co-ordinates of the six base-stations $B_1$ through $B_6$ in a three-dimensional co-ordinate system. The set of equations is given by the following expression:

$$l_{nm}^2 = \sum_{i=x,y,z} (B_{mi} - P_{ni})^2; \text{ with } n, m \in [1,6] \tag{5}$$

wherein n represents the number of a respective position of the mobile terminal, m represents the number of a respective base station, and i refers to one of the three co-ordinate components x, y, or z. The formula (5) can be written in full resulting the following sub-set of equations for the first position of the mobile terminal:

$$\begin{aligned}
l_{11}^2 &= (B_{1x} - P_{1x})^2 + (B_{1y} - P_{1y})^2 + (B_{1z} - P_{1z})^2; \\
l_{12}^2 &= (B_{2x} - P_{1x})^2 + (B_{2y} - P_{1y})^2 + (B_{2z} - P_{1z})^2; \\
l_{13}^2 &= (B_{3x} - P_{1x})^2 + (B_{3y} - P_{1y})^2 + (B_{3z} - P_{1z})^2; \\
l_{14}^2 &= (B_{4x} - P_{1x})^2 + (B_{4y} - P_{1y})^2 + (B_{4z} - P_{1z})^2; \\
l_{15}^2 &= (B_{5x} - P_{1x})^2 + (B_{5y} - P_{1y})^2 + (B_{5z} - P_{1z})^2; \\
l_{16}^2 &= (B_{6x} - P_{1x})^2 + (B_{6y} - P_{1y})^2 + (B_{6z} - P_{1z})^2;
\end{aligned} \tag{5a}$$

a sub-set for the second position:

$$l_{21}^2 = (B_{1x} - P_{2x})^2 + (B_{1y} - P_{2y})^2 + (B_{1z} - P_{2z})^2;$$

$$\begin{aligned}
l_{22}^2 &= (B_{2x} - P_{2x})^2 + (B_{2y} - P_{2y})^2 + (B_{2z} - P_{2z})^2; \\
l_{23}^2 &= (B_{3x} - P_{2x})^2 + (B_{3y} - P_{2y})^2 + (B_{3z} - P_{2z})^2; \\
l_{24}^2 &= (B_{4x} - P_{2x})^2 + (B_{4y} - P_{2y})^2 + (B_{4z} - P_{2z})^2; \\
l_{25}^2 &= (B_{5x} - P_{2x})^2 + (B_{5y} - P_{2y})^2 + (B_{5z} - P_{2z})^2; \\
l_{26}^2 &= (B_{6x} - P_{2x})^2 + (B_{6y} - P_{2y})^2 + (B_{6z} - P_{2z})^2;
\end{aligned} \tag{5b}$$

a sub-set for the third position:

$$\begin{aligned}
l_{31}^2 &= (B_{1x} - P_{3x})^2 + (B_{1y} - P_{3y})^2 + (B_{1z} - P_{3z})^2; \\
l_{32}^2 &= (B_{2x} - P_{3x})^2 + (B_{2y} - P_{3y})^2 + (B_{2z} - P_{3z})^2; \\
l_{33}^2 &= (B_{3x} - P_{3x})^2 + (B_{3y} - P_{3y})^2 + (B_{3z} - P_{3z})^2; \\
l_{34}^2 &= (B_{4x} - P_{3x})^2 + (B_{4y} - P_{3y})^2 + (B_{4z} - P_{3z})^2; \\
l_{35}^2 &= (B_{5x} - P_{3x})^2 + (B_{5y} - P_{3y})^2 + (B_{5z} - P_{3z})^2; \\
l_{36}^2 &= (B_{6x} - P_{3x})^2 + (B_{6y} - P_{3y})^2 + (B_{6z} - P_{3z})^2;
\end{aligned} \tag{5c}$$

a sub-set for the fourth position:

$$l_{41}^2 = (B_{1x} - P_{41x})^2 + (B_{1y} - P_{4y})^2 + (B_{1z} - P_{4z})^2;$$
$$l_{42}^2 = (B_{2x} - P_{4x})^2 + (B_{2y} - P_{4y})^2 + (B_{2z} - P_{4z})^2;$$
$$l_{43}^2 = (B_{3x} - P_{4x})^2 + (B_{3y} - P_{4y})^2 + (B_{3z} - P_{4z})^2; \qquad (5d)$$
$$l_{44}^2 = (B_{4x} - P_{4x})^2 + (B_{4y} - P_{4y})^2 + (B_{4z} - P_{4z})^2;$$
$$l_{45}^2 = (B_{5x} - P_{4x})^2 + (B_{5y} - P_{4y})^2 + (B_{5z} - P_{4z})^2;$$
$$l_{46}^2 = (B_{6x} - P_{4x})^2 + (B_{6y} - P_{4y})^2 + (B_{6z} - P_{4z})^2;$$

a sub-set for the fifth position:

$$l_{51}^2 = (B_{1x} - P_{5x})^2 + (B_{1y} - P_{5y})^2 + (B_{1z} - P_{5z})^2;$$
$$l_{52}^2 = (B_{2x} - P_{5x})^2 + (B_{2y} - P_{5y})^2 + (B_{2z} - P_{5z})^2;$$
$$l_{53}^2 = (B_{3x} - P_{5x})^2 + (B_{3y} - P_{5y})^2 + (B_{3z} - P_{5z})^2; \qquad (5e)$$
$$l_{54}^2 = (B_{4x} - P_{5x})^2 + (B_{4y} - P_{5y})^2 + (B_{4z} - P_{5z})^2;$$
$$l_{55}^2 = (B_{5x} - P_{5x})^2 + (B_{5y} - P_{5y})^2 + (B_{5z} - P_{5z})^2;$$
$$l_{56}^2 = (B_{6x} - P_{5x})^2 + (B_{6y} - P_{5y})^2 + (B_{6z} - P_{5z})^2;$$

and a sub-set for the sixth position:

$$l_{61}^2 = (B_{1x} - P_{6x})^2 + (B_{1y} - P_{6y})^2 + (B_{1z} - P_{6z})^2;$$

$$l_{62}^2 = (B_{2x} - P_{6x})^2 + (B_{2y} - P_{6y})^2 + (B_{2z} - P_{6z})^2;$$
$$l_{63}^2 = (B_{3x} - P_{6x})^2 + (B_{3y} - P_{6y})^2 + (B_{3z} - P_{6z})^2; \qquad (5f)$$
$$l_{64}^2 = (B_{4x} - P_{6x})^2 + (B_{4y} - P_{6y})^2 + (B_{4z} - P_{6z})^2;$$
$$l_{65}^2 = (B_{5x} - P_{6x})^2 + (B_{5y} - P_{6y})^2 + (B_{5z} - P_{6z})^2;$$
$$l_{66}^2 = (B_{6x} - P_{6x})^2 + (B_{6y} - P_{6y})^2 + (B_{6z} - P_{6z})^2;$$

The co-ordinates of the six positions $P_1$ to $P_6$ can be obtained from the above equations, and the total length $1_{total}$ travelled by the mobile terminal along the six positions can be determined according to the equation:

$$l_{total} =$$

$$(P_{1x} - P_{2x})^2 + (P_{1y} - P_{2y})^2 + (P_{1z} - P_{2z})^2 +$$

$$(P_{2x} - P_{3x})^2 + (P_{2y} - P_{3y})^2 + (P_{2z} - P_{3z})^2 +$$

$$(P_{3x} - P_{4x})^2 + (P_{3y} - P_{4y})^2 + (P_{3z} - P_{4z})^2 +$$

$$(P_{4x} - P_{5x})^2 + (P_{4y} - P_{5y})^2 + (P_{4z} - P_{5z})^2 +$$

$$(P_{5x} - P_{6x})^2 + (P_{5y} - P_{6y})^2 + (P_{5z} - P_{6z})^2; \qquad (6)$$

For the described preferred embodiment of the present invention, the first result for $l_{total}$ can therefore be obtained as soon as the six TA values for the sixth position of the mobile terminal have been acquired.

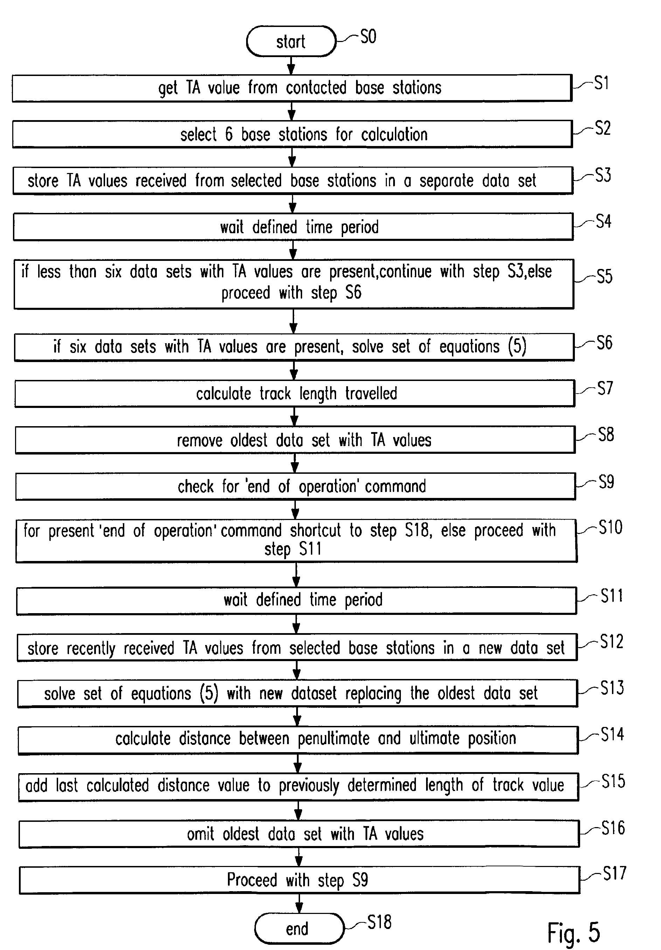

When the mobile terminal 2 moves beyond the sixth position within the cellular telecommunication system, the first sub-set of equations (5a) can be replaced by a sub-set for the new position. Thus, no alterations for the calculation process based on the set of equations (5) are necessary for obtaining the length of a path extending beyond the sixth position of the mobile terminal. The principle steps of a calculation process 50 according to the present invention are shown in Fig. 5 where the logical steps performed by the calculation means 64 are outlined.

The process starts in step S0 and continues with acquiring the timing advance values from the different base stations in step S1. In step S2 six base stations are selected for further processing. The timing advance values received from selected base stations are stored in a separate data set in step S3. Next, in step S4 the process waits for a defined time period to allow the mobile terminal to move to a new position. When this waiting time period has expired, the process checks in step S5 if less than six data sets with TA values from the six base stations used for the calculation are available and if so, the process returns to step S3. If already six data sets with TA values from the six base stations are available in step S5, the set of equations (5) is solved to obtain the data for the six positions of the mobile phone. Next, the length of the track travelled by the mobile phone is calculated in step S7 on the basis of equation (6) thereby providing the first result.

The oldest available data set containing the TA values, in the first run that for the first position of the mobile terminal is then removed in step S8. A user is not only allowed to start the operation in step S0 but also to stop it, in step S9 it is checked if an 'end of operation' command has been initiated by a user. If such a command can be verified, step S10 shortcuts to step S18 where the process 50 is terminated. Else, the process continues with step S11 where it waits for another defined time period to allow the mobile terminal to move to a further position. After the end of this time period, the TA values received from the six base stations at the new position are stored in a new separate data set in step S12. In step S13, a set of equations (5) is solved with the data from the new data set replacing the data of the previously omitted oldest data set. Next, the length $l_{incr}$ of the new part of the track beginning at the last but one position $P_{N-1}$ and ending at the new position $P_N$ is calculated according to

$$l_{incr} = \sqrt{\sum_{i=x,y,z} (P_{i(N-1)} - P_{iN})^2}; \qquad (6a)$$

in step S14, and in the following step S15 this value is added to the distance value $l_{total}$ for the length of the track to the last but one position $P_{N-1}$ calculated previously. Next, the now oldest data set containing TA values for a previous position of the mobile terminal is disposed off in step S16 and finally the process is informed in step S17 to continue with step S9.

Although the procedure described above refers to a utilisation of six base stations, the present invention is not restricted to this example. Indeed, any of the combinations of base stations and positions listed in table 1 can analogously be used instead. For the sake of clarity, only the steps necessary for transforming timing advance values received by the mobile terminal into an information of the length of the path travelled by the mobile terminal are shown in the flow process chart of Fig. 5, while common details like for example the algorithm for solving the set of equations are omitted in the illustration.

The above described process can be modified in various ways. First of all it is not necessary to transform the timing advance values into a length value as will be necessary when using equations (5) and (6). Instead, the equations (5) and (6) can also be based directly on the TA values thereby reducing the number of calculation steps necessary.

For this purpose, equation (5) is transformed to

$$TA_{nm}^2 = \sum_{i=x,y,z}(B_{mi}^| - P_{ni}^|)^2; \qquad \text{with n, m} \in [1,6] \qquad (7)$$

wherein $TA_{nm}$ is the timing advance value received by the mobile terminal 2 at a position $P_n$ from a base station $B_m$. TA is related to the distance between the position $P_n$ of the mobile terminal and the base station $B_m$ according to equation (1) which can also be represented in the form

$$1_{nm} = const. \cdot TA_{nm;} \qquad (1a)$$

The values of $B'_{mi}$ and $P'_{ni}$ are analogously related to the co-ordinates $B'_{mi}$ and $P'_{ni}$, respectively, by the equations

$$B_{mi} = const. \cdot B_{mi}^|; \qquad (7a)$$

$$P_{ni} = const. \cdot P_{ni}^|; \qquad (7b)$$

The track length calculated in step S7 will then correspond to

$$1_{total}^| = \sum_{l=1}^{N-1}\sqrt{\sum_{i=x,y,z}(P_{li}^| - P_{(l+1)i}^|)^2}; \qquad (8)$$

and the incremental length for the last segments of the tracks will be calculated to:

$$1_{incr}^| = \sum_{l=n-N}^{N-1}\sqrt{\sum_{i=x,y,z}(P_{li}^| - P_{(l+1)i}^|)^2}; \qquad (8a)$$

The values calculated according to equations (8) and (8a) differ from the spatial value for the length by the same constant than a timing advance value differs from the distance it represents. The actual length value can therefore be obtained by simply multiplying the values obtained from equations (8) and (8a) with a constant defined in equation (1a) or by dividing it with the inverse value of this constant:

$$1_{total} = const \cdot 1_{total}^| = \frac{1_{total}^|}{const.^{-1}}; \qquad (9)$$

$$1_{incr} = const. \cdot 1_{incr}^| = \frac{1_{incr}^|}{const.^{-1}}; \qquad (9a)$$

As an alternative to solving each time the full set of equations in step S13, the data for the co-ordinates of the six base stations used are at least temporarily stored. Thus only a set of six equations containing the co-ordinates for the new position of the mobile terminal will have to be solved. With the co-ordinates of the base stations known, only three unknown quantities representing the components of the co-ordinates for the new position will then have to be found from the six equations.

A further, considerable reduction of calculation time can be achieved by reducing this calculation method to the use of only the timing advance values received from the first three base stations once the calculation for the first six positions has been performed. Then only three equations have to be solved, which is sufficient to obtain the three desired values for the co-ordinate components.

When a mobile terminal is moved over long distances, there might come a time were it leaves the range, i.e. the cell of one of the base stations used for an above described calculation. A new base station in a new neighbouring cell will then replace the former base station for the calculation. At the new position data for setting up six new equations are acquired from which nine unknown quantities would have to be determined, which is not possible. Therefore, data for a second new position have to be acquired so that at least twelve equations are available to determine the twelve new unknown quantities. This means that the output of an information for the length of the track and/or for co-ordinate data has to be postponed until the data are acquired for the second new position after skipping one of the base stations used for the calculation. If more than one base station has to be skipped, the situation will be even worse.

The suitability of a base station for delivering data on a next position can be judged by the absolute timing advance value received from it, and further by monitoring the evolution of the timing advance value over the different positions in the past. Usually a mobile terminal 2 stays in radio contact with up to 16 different base station which are also judged with reference to their reception quality. As the mobile terminal 2 obtains timing advance values from each of these base stations, a judging unit 66 of the mobile terminal 2 judges which base stations currently not used may be utilised when it might get out of the range of a currently used base station. A judging unit 66 will store the actual TA values of these base stations in the storage unit 65 of the mobile terminal 2. As soon as a base station was skipped for further use, the judging unit will replace its data with providently stored data from an alternative base station and recalculate the set of equations (5) or (7), respectively. Thus, an information referring to the new position is available with the data obtained for the first position within the new configuration of base stations used.

As shown in Fig. 5, the calculation process comes to a stop in step S4 as well as in step S11 for a certain time period to allow the mobile terminal to move to a different position. This waiting time period can be a static value but may also be designed as a flexible variable adapting its value to the velocity with which the mobile terminal is on the move. The faster the mobile terminal will move within the telecommunication system, the shorter the value for the waiting time will be.

For the static values of steps S4 and S11 a default value can be used. This default value has to be short enough to allow an accurate calculation of the track length travelled by the mobile terminal 2 even if it is used on fast moving vehicles like e.g. a car, a train or the like. In an especial embodiment of the present invention, a user is allowed to enter a waiting time value of his own choice, thereby being able to adapt the density of positions used in the calculation like calibration points along his route in accordance to his current way of displacement. If the user uses e.g. the mobile terminal for monitoring his diurnal jogging distance, he will use a longer value for the waiting time period than when monitoring the distance of a business trip for which he will use a car.

In a further embodiment of the present invention a flexible value for the waiting time is used. In step S4 of the calculation process 50 shown in Fig. 5 a default value for the waiting time period is used, which is short enough that an accurate determination of the travel path is possible even for a very fast movement of the mobile terminal. When the TA values are received for the second position $P_2$, the waiting time estimation means 66 compares these values with those received for the first position $P_1$ for getting an indication for the displacement velocity of the mobile terminal 2. The waiting time period used in step S11 of the process 50 illustrated in the Fig. 5 is then set to a value adapted to the displacement velocity estimated before. This process is repeated each time TA values are required for a new position.

In a further embodiment of the present invention, the waiting time estimation unit 66 monitors the TA values received from the different base stations and constantly compares the recently received values with those obtained previously to get a clue of the current displacement velocity. Depending on the thus estimated displacement velocity, the waiting time estimation unit triggers the calculation process 50 in step S11 to continue with step S12 instead of setting a value for the waiting time. In this way, the density of calibration points along the travelled track can easily be adapted to the displacement velocity of the mobile terminal, whereby the minimum distance between two adjacent positions on the track is determined by the actual displacement velocity and the time necessary to acquire the TA values needed from the respective base stations.

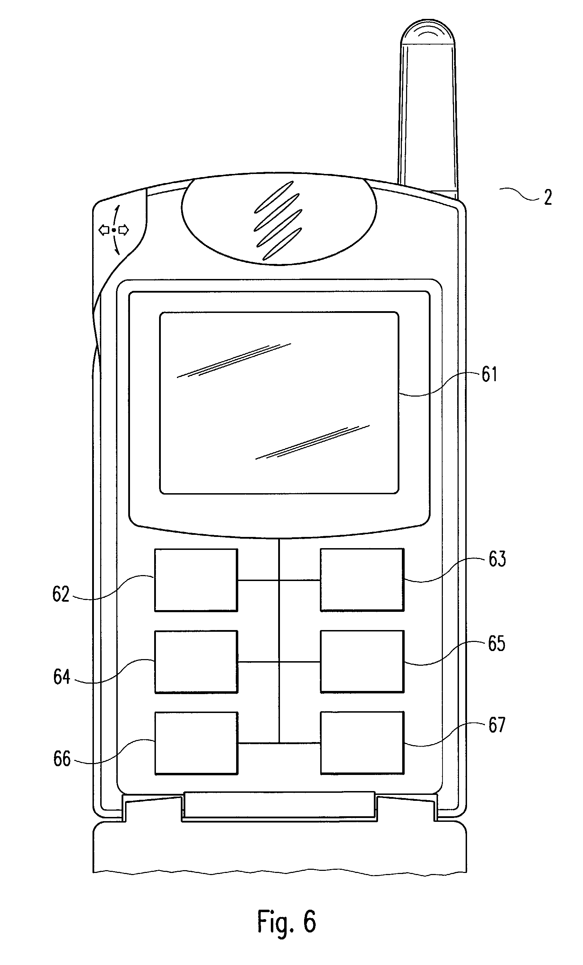

Referring to Fig. 6, the components necessary to implement the current invention on a mobile terminal are shown. It is to be understood that only elements important for the understanding of the present invention are shown in Fig. 6, while other elements such as coding means, modulation means, RF part and the like necessary for the operation of the mobile terminal are omitted for the sake of clarity.

The mobile terminal comprises a display 61 for the graphical representation of data generated by the graphical user interface 62. The display 61 provides an optical interface for a user controlled operation of the calculation process 50 according to the present invention and a means for presenting to a user the data evaluated by the calculation 50.

A graphical user interface 62 edits the data originating from the processing means and input means of the mobile terminal 2 to be presented at the display 61. With respect to the current invention, the graphical user interface 62 provides a menu structure which forms a graphical operating panel on the display 61, allowing a user to start and stop the calculation process 50, a modifying of parameters like for instance for defining the use of a certain fixed time value or a certain mode for creating a flexible waiting time value, or allowing a user to define which results of calculation process are to be stored for being called up by the user at a later time or the like.

The data acquisition unit 63 is responsible for acquiring the data transmitted from the contacted base station like for example the TA values forming the base for a calculation of the length of the track travelled by the mobile terminal 2.

The calculation process 50 lined out in Fig. 5 is accomplished in the calculation means 64. Based on the TA values provided by the data acquisition unit 63, the length of the track travelled by the mobile terminal 2 within the cellular telecommunication system is evaluated according to equation (5) or equations (5a) to (5f), respectively. If required, the calculation means 64 further provides the position data of the involved base stations and/or of the positions taken in by the mobile terminal along its track. To this end, the calculation means 64 comprises a calculation control unit which function is outlined by example in Fig. 5, a solver for the equation set (5) comprising the equation sets (5a) to (5f), and a calculator of the track length travelled according to equations (6) or (6a), respectively. For the storage of default values, intermediate values and final results or the like, a storage means 65 is provided on the mobile terminal 2. The storage means 65 may comprise volatile as well as permanent memory units. Data to be stored in the storage means 65 are for example the default and the current value of the waiting time, the distance already travelled along the track, the last co-ordinates of the mobile terminal as well as certain co-ordinates selected by the user for his purposes, the TA values of the base stations with which the mobile terminal 2 is in contact or in principle all data that are used or generated by the calculation 50 performed by the calculation means 64, the data used by the graphically using interface 62, the data used and generated by the waiting time estimation unit 67, and the judging unit 66 described below.

Which base stations will be used for the calculation process of the calculation means 64 is judged by the judging unit 66. This judging unit 66 judges in principle each of the base stations from which the mobile terminal 2 receives data for its suitability to be used for the calculation of the track length travelled by the mobile terminal. It not only selects the base stations used for the current calculation, but also monitors the other base stations within reach of the mobile terminal 2 to judge the likelihood with which they might replace a currently used base station in the near future. The TA values of base stations considered as a potential substitute for one of the currently used base stations are stored in addition to those of the currently used base station in the storage means 65 to have the necessary data ready when the hand-over to the new base stations finally occurs.

A waiting time allowing the mobile terminal to move a certain distance between a first and a second position for recording respective TA values is calculated by the waiting time estimation unit 67. The estimation of the waiting time used in step S11 of the calculation process 50 outlined by example in Fig. 5 is either based on the distance calculated according to equation (6a) between a last and the last but one position or on a monitoring of the development of the TA values received from the contacted base stations like described above.

**Claims**

1. Method for calculating a length of a track travelled by a mobile terminal (2) when being moved within a cellular telecommunication system (1, 10), whereby the calculation is based on time values (5) received from at least four different base stations (3) of the mobile telecommunication system (1, 10), with each time value (5) being indicative of the propagation time of signals transmitted from the mobile terminal to a respective base station at different positions ($P_1$, $P_2$, $P_3$, $P_4$, $P_5$, $P_6$,) of the mobile terminal (2) along said track.

2. Method according to claim 1,
   **characterised in**
   **that** the timing advance value forms said time value being indicative of the propagation time of signals transmitted from the mobile terminal to a respective base station.

3. Method according to claim 1 or 2,
   **characterised in**
   **that** the co-ordinates of each position ($P_1$, $P_2$, $P_3$, $P_4$, $P_5$, $P_6$) of the mobile terminal (2) along said track are calculated.

4. Method according to claim 3,
   **characterised in**

**that** the length of said track travelled by the mobile terminal is calculated from said calculated positions ($P_1$, $P_2$, $P_3$, $P_4$, $P_5$, $P_6$) of the mobile terminal (2) along said track.

5. Method according to one of the claims 1 to 4,
   **characterised in**
   **that** a calculation is based on time values representative for distance and/or co-ordinate values with only a final result of the calculation being transformed in a special value by multiplication or division with a constant value.

6. Method according to one of the claims 1 to 5,
   **characterised in**
   **that** the time values (5) received from six different base stations (3) are used to calculate the length of the track travelled be the mobile terminal (2).

7. Mobile terminal for use in a cellular mobile telecommunication system (1, 10) with a calculation means (64) adapted to perform a method according to one of the claims 1 to 6.

8. Software product for calculating a length of a track travelled by a mobile terminal (2) when being moved within a cellular telecommunication system (1, 10) adapted to perform a method according to one of the claims 1 to 6 when being stored on a storage means (65) and executed by a processing means of the mobile terminal (2).

Fig. 1

Fig. 2

Fig. 3

Fig. 4

```
                          ┌─────────┐
                          │  start  │────S0
                          └─────────┘
                               │
                               ▼
┌──────────────────────────────────────────────────────────────┐
│            get TA value from contacted base stations           │────S1
└──────────────────────────────────────────────────────────────┘
                               │
                               ▼
┌──────────────────────────────────────────────────────────────┐
│              select 6 base stations for calculation            │────S2
└──────────────────────────────────────────────────────────────┘
                               │
                               ▼
┌──────────────────────────────────────────────────────────────┐
│  store TA values received from selected base stations in a separate data set │────S3
└──────────────────────────────────────────────────────────────┘
                               │
                               ▼
┌──────────────────────────────────────────────────────────────┐
│                   wait defined time period                     │────S4
└──────────────────────────────────────────────────────────────┘
                               │
                               ▼
┌──────────────────────────────────────────────────────────────┐
│  if less than six data sets with TA values are present,continue with step S3,else │────S5
│                    proceed with step S6                        │
└──────────────────────────────────────────────────────────────┘
                               │
                               ▼
┌──────────────────────────────────────────────────────────────┐
│  if six data sets with TA values are present, solve set of equations (5) │────S6
└──────────────────────────────────────────────────────────────┘
                               │
                               ▼
┌──────────────────────────────────────────────────────────────┐
│                  calculate track length travelled             │────S7
└──────────────────────────────────────────────────────────────┘
                               │
                               ▼
┌──────────────────────────────────────────────────────────────┐
│                remove oldest data set with TA values           │────S8
└──────────────────────────────────────────────────────────────┘
                               │
                               ▼
┌──────────────────────────────────────────────────────────────┐
│               check for 'end of operation' command            │────S9
└──────────────────────────────────────────────────────────────┘
                               │
                               ▼
┌──────────────────────────────────────────────────────────────┐
│  for present 'end of operation' command shortcut to step S18, else proceed with │────S10
│                         step S11                              │
└──────────────────────────────────────────────────────────────┘
                               │
                               ▼
┌──────────────────────────────────────────────────────────────┐
│                   wait defined time period                     │────S11
└──────────────────────────────────────────────────────────────┘
                               │
                               ▼
┌──────────────────────────────────────────────────────────────┐
│  store recently received TA values from selected base stations in a new data set │────S12
└──────────────────────────────────────────────────────────────┘
                               │
                               ▼
┌──────────────────────────────────────────────────────────────┐
│  solve set of equations (5) with new dataset replacing the oldest data set │────S13
└──────────────────────────────────────────────────────────────┘
                               │
                               ▼
┌──────────────────────────────────────────────────────────────┐
│     calculate distance between penultimate and ultimate position │────S14
└──────────────────────────────────────────────────────────────┘
                               │
                               ▼
┌──────────────────────────────────────────────────────────────┐
│  add last calculated distance value to previously determined length of track value │────S15
└──────────────────────────────────────────────────────────────┘
                               │
                               ▼
┌──────────────────────────────────────────────────────────────┐
│                 omit oldest data set with TA values            │────S16
└──────────────────────────────────────────────────────────────┘
                               │
                               ▼
┌──────────────────────────────────────────────────────────────┐
│                     Proceed with step S9                       │────S17
└──────────────────────────────────────────────────────────────┘
                               │
                               ▼
                          ┌─────────┐
                          │   end   │────S18
                          └─────────┘
```

Fig. 5

Fig. 6

European Patent
Office

**EUROPEAN SEARCH REPORT**

Application Number

EP 02 00 2279

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 96 01531 A (VAZVAN BEHRUZ ;KARBASI AMIR KIUMARS (FI)) 18 January 1996 (1996-01-18) <br> * abstract * <br> * page 4, line 36 - line 37 * <br> * page 5, line 22 - line 24 * <br> * page 6, line 10 - line 25 * <br> * page 7, line 8 - line 14 * <br> --- | 1,7,8 | G01C21/20 <br> H04Q7/38 <br> G01C22/00 |
| A | EP 1 137 301 A (ERICSSON TELEFON AB L M) 26 September 2001 (2001-09-26) <br> * abstract * <br> * page 2, paragraph 6 * <br> * page 3, paragraph 25 * <br> * page 5, paragraph 40 * <br> --- | 1,7,8 | |
| A | US 6 201 803 B1 (MUNDAY ET AL.) 13 March 2001 (2001-03-13) <br> * abstract * <br> * column 8, line 50 - line 62 * <br> * column 9, line 36 - line 41 * <br> ----- | 1,7,8 | |

**TECHNICAL FIELDS SEARCHED (Int.Cl.7)**

G01C
H04Q

The present search report has been drawn up for all claims

| Place of search | Date of completion of the search | Examiner |
|---|---|---|
| THE HAGUE | 24 June 2002 | Hoekstra, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03 82 (P04C01)

**ANNEX TO THE EUROPEAN SEARCH REPORT
ON EUROPEAN PATENT APPLICATION NO.**                EP 02 00 2279

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2002

| Patent document cited in search report | | Publication date | Patent family member(s) | | Publication date |
|---|---|---|---|---|---|
| WO 9601531 | A | 18-01-1996 | FI | 941096 A | 07-01-1996 |
| | | | WO | 9601531 A2 | 18-01-1996 |
| EP 1137301 | A | 26-09-2001 | EP | 1137301 A1 | 26-09-2001 |
| | | | EP | 1137305 A1 | 26-09-2001 |
| | | | US | 2001046869 A1 | 29-11-2001 |
| US 6201803 | B1 | 13-03-2001 | AU | 701275 B2 | 21-01-1999 |
| | | | AU | 5507296 A | 21-11-1996 |
| | | | CA | 2219783 A1 | 07-11-1996 |
| | | | EP | 0824840 A1 | 25-02-1998 |
| | | | WO | 9635306 A1 | 07-11-1996 |
| | | | JP | 11505078 T | 11-05-1999 |
| | | | NO | 975041 A | 30-12-1997 |
| | | | NZ | 306501 A | 29-04-1999 |

EPO FORM P0459

For more details about this annex : see Official Journal of the European Patent Office, No. 12/82